Europäisches Patentamt

European Patent Office

Office européen des brevets

(19)

(11) Veröffentlichungsnummer: **0 069 268**
**B1**

# EUROPÄISCHE PATENTSCHRIFT

(12)

(45) Veröffentlichungstag der Patentschrift:
04.12.85

(21) Anmeldenummer: **82105417.8**

(22) Anmeldetag: **21.06.82**

(51) Int. Cl.⁴: **D 01 D 5/24,** D 01 F 6/18

(54) **Verfahren zur Herstellung trockengesponnener Polyacrylnitrilhohlfasern und -fäden.**

(30) Priorität: **01.07.81 DE 3125898**

(43) Veröffentlichungstag der Anmeldung:
**12.01.83 Patentblatt 83/2**

(45) Bekanntmachung des Hinweises auf die Patenterteilung:
**04.12.85 Patentblatt 85/49**

(84) Benannte Vertragsstaaten:
**DE GB IT**

(56) Entgegenhaltungen:
**EP - A - 0 051 203**
**DE - A - 2 804 376**
**DE - B - 1 115 404**

(73) Patentinhaber: **BAYER AG, Konzernverwaltung RP**
**Patentabteilung, D-5090 Leverkusen 1 Bayerwerk (DE)**

(72) Erfinder: **Reinehr, Ulrich, Dr., Röntgenstrasse 29,**
**D-4047 Dormagen 1 (DE)**
Erfinder: **Herbertz, Toni, Hauptstrasse 79,**
**D-4047 Dormagen 1 (DE)**
Erfinder: **Jungverdorben, Hermann-Josef,**
**Kirchstrasse 34a, D-4047 Dormagen 11 (DE)**
Erfinder: **Burghartz, Hans Karl, Cyriakusstrasse 88a,**
**D-4040 Neuss (DE)**

## Beschreibung

Die Herstellung von Hohlfasern nach dem Schmelzspinnverfahren oder der Naßspinntechnologie ist schon seit vielen Jahren bekannt. Die in zahlreichen Patenten angegebenen Verfahren lassen sich im wesentlichen auf 3 Methoden zurückführen.

Bei der ersten Methode verspinnt man ein geschmolzenes Polymeres, beispielsweise einen Polyester, aus Düsen mit nebeneinander liegenden Segmentbögen. Durch Aufblähung des geschmolzenen Polymeren unterhalb der Düse und Ineinanderfließen der Segmentbogenenden in fortlaufender Form werden synthetische Hohlfasern erzeugt. Bei der zweiten Methode verwendet man eine Hohlraumnadel, die im Mittelpunkt der Düsenlochöffnung plaziert sein muß, wobei man gasförmige Stoffe oder Füllmittel durch die Hohlraumnadel pumpt. Das Polymere fließt um die Nadel und das Gas füllt den Hohlraum im Zentrum aus und stabilisiert die Form bis das Polymere abgekühlt ist. Auf diese Weise werden besonders Viskosehohlfäden hergestellt, wobei als lumenfüllendes Medium beispielsweise Ricinusöl verwendet wird. Bei der dritten Methode schließlich reicht ein fester Stift in die Düsenlochöffnung. Hierbei handelt es sich im allgemeinen um einen schwierigen Spinnprozeß, da das Polymere in eine geschlossene Form übergehen will. Das Verfahren ist besonders für Querschnittsmodifikationen geeignet, es muß jedoch Luft am Stiftende zugeführt oder Vakuum angelegt werden, um hohlraumhaltige Fasern zu erzeugen.

Hohlfäden und -fasern haben inzwischen vielerlei Einsatzgebiete gefunden. So werden sie z. B. zur Meerwasserentsalzung, zur Reinigung von Flüssigkeiten und Gasen, als Ionenaustauscher, für Umkehrosmose, Dialyse und Ultrafiltration (künstliche Nieren) sowie wegen ihres niedrigen Gewichtes und hohen Bausches für Komfortkleidung verwendet. Besonders die Stoffreinigung, z. B. von Industriegasen, ist in letzter Zeit in den Vordergrund gerückt. Zusammenfassende Artikel über Herstellung und Bedeutung von synthetischen Hohlfasern befinden sich in Encyclopedia of Polymer Science and Technology 15, (1971), Seite 258—272, in Acta Polymerica 30, (1979), Seite 343—347 und in Chemical Engineering, Febr. 1980, Seite 54—55.

Bisher hat es auch nicht an Versuchen gefehlt, Acrylhohlfasern nach einem Trockenspinnprozeß aus einer Spinnlösung herzustellen. Wegen der dabei auftretenden Probleme ist jedoch bis heute kein technisches Verfahren zur Herstellung von Acrylhohlfasern nach dieser Technologie bekanntgeworden.

Unter Hohlfasern werden hier Fasern verstanden, die einen in Längsrichtung im Innern der Faser angeordneten durchgehenden kontinuierlich fortlaufenden Kanal aufweisen.

Während man Acrylnitrilpolymere nach der Naßspinntechnologie verhältnismäßig einfach nach einer der vorgenannten Methoden in Hohlfasern überführen kann, führt dies bei einem Trockenspinnprozeß infolge eines anderen Fadenbildungsmechanismus zu erheblichen Schwierigkeiten. Beim Naßspinnprozeß wird die Fadenbildung durch Koagulation der Spinnlösung in einem wäßrigen Fällbad, das ein Lösungsmittel für Polyacrylnitril enthält, vorgenommen, wobei man Fällbadkonzentration, -temperatur und zusätzliche Koagulierungsmittel, wie beispielsweise wäßrige Salzlösungen, in weiten Grenzen variieren kann. So beschreibt beispielsweise die DE-A-2 346 011 die Herstellung von Acrylhohlfasern nach Methode 2 für ein Naßspinnverfahren mit wäßrigem DMF als Fällbad und die DE-A-2 321 460 für wäßrige Salpetersäure als Fällbad, wobei man aus Düsen mit ringförmigen Öffnungen spinnt und eine Flüssigkeit als inneres Fällmittel in den Mittelteil der ringförmigen Öffnung einleitet.

Versucht man die Methoden 1 bis 3 auf ein Trockenspinnverfahren anzuwenden, so stößt man auf erhebliche Schwierigkeiten, da beim Spinnen aus einer Spinnlösung erst ein Teil des Lösungsmittels nach Austritt aus der Düsenöffnung verdampfen muß, um eine Fadenbildung und -verfestigung zu erreichen. Wegen des hohen technischen Aufwandes und der schwierigen Prozeßführung im Falle der Herstellung von Acrylhohlfasern durch Trockenspinnen aus Spinnlösungen wurden die Methoden 2 und 3 nicht weiterverfolgt.

Versucht man nach Methode 1 aus Profildüsen mit nebeneinander liegenden Segmentbögen nach dem Trockenspinnverfahren Hohlfasern zu erzeugen, so erhält man in der Regel nur hantelförmige bis unregelmäßige, bizarre Querschnitte, die in ungleichmäßiger Form Lufteinschlüsse aufweisen. Steigert man die Polymerfeststoffkonzentration, um durch Erhöhung der Strukturviskosität das vorgegebene Hohlraumprofil zu erhalten, so treten unerwartete Probleme auf. Der Erhöhung des Feststoffgehaltes sind infolge Gelierung, Fließfähigkeit und Handhabung derartiger Spinnlösungen Grenzen gesetzt. So kann man beispielsweise ein Acrylnitrilcopolymerisat mit der chemischen Zusammensetzung 93,6% Acrylnitril, 5,7% Acrylsäuremethylester und 0,7% Natriummethallylsulfonat vom K-Wert 81 nur bis zu einer Feststoffkonzentration von maximal 32 Gew.-% in einem Spinnlösungsmittel wie Dimethylformamid lösen und zu Fäden verspinnen. Versucht man, den Feststoffgehalt weiter anzuheben, so gelieren derartige Spinnlösungen beim Abkühlen schon bei Temperaturen um 50 bis 80°C, so daß ein störungsfreies Spinnen unmöglich wird.

Die nach der DE-A-2 804 376 mit dreiecksförmigen Düsen mit einer seitlichen Öffnung und seitlich herausragenden Stegen erzeugten Hohlfasern werden zwar nach einem Trockenspinnverfahren hergestellt, jedoch sind es nicht Hohlfasern im Sinne der Erfindung, da der Hohlraum von porösen Stegen unterbrochen wird.

Aufgabe der vorliegenden Erfindung war es, wegen der vielseitigen Anwendungsmöglichkeiten derartiger Hohlfasern und -fäden ein Trockenspinnverfahren zur Herstellung von Acrylnitrilhohlfasern zur Verfügung zu stellen, bei dem der Hohlraum nicht von Stegen unterbrochen ist.

Es wurde nun überraschenderweise gefunden, daß man auch mit einem Trockenspinnverfahren Polyacrylnitrilhohlfäden spinnen kann, wenn man Spinnlösungen mit einer Viskosität, die einen bestimmten Wert überschreitet, einsetzt, Düsen mit segmentförmigen Düsenlöchern verwendet, die bestimmten Abmessungen unterliegen und die Spinnluft in bestimmter Weise auf die Fäden einwirken läßt.

Gegenstand der Erfindung ist daher ein Verfahren zur Herstellung von Polyacrylnitrilhohlfäden und -fasern, dadurch gekennzeichnet, daß man fadenbildende Acrylnitrilpolymere nach einem Trockenspinnprozeß aus einer Lösung durch eine Düse mit ringförmigen Düsenlöchern verspinnt, wobei die Lösung eine Viskosität von mindestens 120 Kugelfallsekunden, gemessen bei 80°C oder von von mindestens 75 Kugelfallsekunden, gemessen bei 100°C, aufweist, wobei der Ring der ringförmigen Düsenlöcher aus drei, insbesondere gleichgroßen Ringsegmenten besteht, deren Abstand voneinander maximal 0,2 mm beträgt, die Düsenlochfläche kleiner als 0,2 mm$^2$ und die Schenkelbreite der Ringsegmente maximal 0,1 mm ist und wobei die Spinnluft vom Düsenmittelpunkt in Querrichtung zum Fadenabzug auf die Fäden einwirkt.

Vorzugsweise läßt man zusätzlich Spinnluft von außen auf die Fäden einwirken, die in Querrichtung oder bevorzugt in Längsrichtung auf die Fäden einwirkt. Düsen mit ringförmigen Düsenlöchern aus 2 oder 4 Ringsegmenten führen nicht zum gewünschten Erfolg, sondern es werden Hohlfasern mit einer ganzen Reihe von Leckstellen erzeugt, die für die meisten Einsatzzwecke nicht verwendbar sind.

Dem Spinnen schließen sich die üblichen weiteren Verfahrensschritte des Polyacrylnitriltrockenspinnverfahrens an.

Die Viskosität in Kugelfallsekunden, gemessen bei 80 oder bei 100°C, wurde nach der Methode von K. Jost, Reologica Acta, Band 1 (1958), Seite 303, bestimmt. Vorzugsweise ist die Düsenlochfläche kleiner als 0,1 mm$^2$ und die Schenkelbreite zwischen 0,02 bis 0,06 mm. Bei Düsenlochflächen größer 0,2 mm$^2$ wird ein Verfließen der Querschnittsform festgestellt. Man erhält unscharfe knollenartig bis formlos deformierte, bizarre Gebilde.

Spinnlösungen der angegebenen Viskosität, die auch eine höhere Konzentration des fadenbildenden Polymeren als sonst üblich enthalten, werden nach DE-A-2 706 032 erhalten, indem man entsprechend konzentrierte Suspensionen des fadenbildenden Polymeren, die leicht förderbar sind, im gewünschten Lösungsmittel herstellt und diese Suspensionen durch kurzzeitiges Erhitzen auf Temperaturen bis knapp unterhalb des Siedepunktes des verwendeten Spinnlösungsmittels in viskositätsstabile Spinnlösungen überführt.

Die Suspensionen zur Herstellung solcher Spinnlösungen erhält man, indem man das Spinnlösungsmittel nötigenfalls mit einem Nichtlöser für das zu verspinnende Polymere versetzt und anschließend unter Rühren das Polymere zufügt.

Als Nichtlöser im Sinne der Erfindung kommen alle Stoffe in Frage, die für das Polymere ein Nichtlösungsmittel sind und sich mit dem Spinnlösungsmittel in weiten Grenzen mischen lassen.

Die Siedepunkte der Nichtlöser können sowohl unterhalb als auch oberhalb des Siedepunktes des verwendeten Spinnlösungsmittels liegen. Derartige Substanzen, welche in festem oder flüssigem Aggregatzustand vorliegen können, sind beispielsweise Alkohole, Ester oder Ketone sowie ein- und mehrfach substituierte Alkylether und Ester mehrwertiger Alkohole, anorganische oder organische Säuren, Salze und dergleichen. Als bevorzugte Nichtlöser werden einmal wegen seiner einfachen Handhabung und Entfernung im Spinnschacht ohne Rückstandsbildung und Rückgewinnung Wasser und zum anderen Glycerin, Mono- und Tetraethylenglykol sowie Zucker eingesetzt.

Bei Verwendung von Nichtlösern, deren Siedepunkt unterhalb des Siedepunktes des Spinnlösungsmittels liegt, erhält man Acrylhohlfasern, die sich von den bekannten kompakten Typen durch ein erheblich gesteigertes Wasserrückhaltvermögen auszeichnen. Bei Verwendung von Nichtlösern, deren Siedepunkt über dem der Spinnlösungsmittel liegt, erhält man, wie bereits in DE-A-2 554 124 beschrieben, Acrylfasern mit einem hohen Wasserrückhaltevermögen. Diese Fasern zeichnen sich durch besondere Trageeigenschaften aus. Während im ersten Falle der Nichtlöser im Spinnschacht entfernt wird, muß im zweiten Falle der Nichtlöser im Anschluß an den Spinnprozeß in einem weiteren Verfahrensschritt aus der verfestigten Faser ausgewaschen werden.

Im Falle der Verwendung von Wasser als Nichtlöser konnten bei Einsatz des auf Seite 2 erwähnten Acrylnitrilcopolymerisates vom K-Wert 81 ab einer Feststoffkonzentration der Spinnlösung von 36 Gew.-% Hohlfasern nach dem Trockenspinnverfahren aus den genannten Düsen erhalten werden.

Der Wasseranteil derartiger Suspensionen aus Polyacrylnitril und Dimethylformamid liegt im Bereich zwischen 2 bis 10%, bezogen auf die Gesamtsuspension. Unterhalb 2 Gew.-% Wasserzugabe erhält man keine fließfähige, transportfähige Suspension mehr, sondern einen dicken, trägen Brei. Beträgt der Wassergehalt andererseits mehr als 10 Gew.-%, so zerplatzen die Fäden beim Spinnprozeß unterhalb der Düse wegen des hohen Wasserdampfpartialdruckes beim Austritt aus den Düsenlöchern. Der prozentuale Wasseranteil in der Spinnlösung beeinflußt nicht die Profilgebung an der Düse. Entscheidend ist allein die Polymerfeststoffkonzentration. Bei Feststoffgehalten bis zu 40% haben sich Wasseranteile von 2 bis 3% als optimal erwiesen, um noch fließfähige transportable Suspensionen bei Raumtemperatur zu erhalten. Verwendet man anstelle von Wasser einen anderen Nichtlöser, wie Propanol oder Butanol, so kommt man zu den gleichen Ergebnissen. Für Acrylnitrilcopolymerisate mit K-Werten kleiner als 81 lassen sich natürlich auch noch höher konzentrierte Spinnlösungen herstellen. So kann man beispielsweise aus einem Acrylnitrilcopolymerisat aus 92% Acrylnitril, 6% Acrylsäuremthylester und 2% Natriummethallylsulfonat vom K-Wert 60 eine Suspension aus 45% Copolymerisat-Feststoffgehalt, 4% Wasser und 51% Dimethylformamid herstellen, die eine Viskosität von 142 Kugelfallsekunden, gemessen bei 80°C, aufweist, die noch bei Raumtemperatur fließfähig ist und durch Lösen und Verspinnung in Hohlfasern überführt werden kann. Andererseits kann man bei Verwendung von Polymerisaten mit höheren K-Werten auch bei niedrigerer Feststoffkonzentration als die angegebenen 36%igen Spinnlösungen vom K-Wert 81 beim Trockenspinnen zu Hohlfasern gelangen. Entscheidend für die Formgebung an der Düse ist allein die Viskosität.

Im Falle der Verwendung von Monoethylenglykol als Nichtlöser konnten bei Verwendung des auf Seite 2 erwähnten Acrylnitrilcopolymerisates Spinnlösungen mit Feststoffkonzentrationen von 36 Gew.-% oder größer hergestellt werden, deren Viskositäten wenigstens 75 Kugelfallsekunden, gemessen bei 100°C, betrugen. Aus diesen Spinnlösungen wurden Hohlfäden und -fasern ersponnen, die sich nach dem Auswaschen des Nichtlösers und der üblichen Nachbehandlung durch hohe Wasserrückhaltevermögen auszeichneten. Der Nichtlöseranteil derartiger Suspensionen aus Polyacrylnitril, Dimethylformamid und Monoethylenglykol, muß, wie in DE-A-2 554 124 bereits mitgeteilt, mindestens 5 Gew.-%, bezogen auf Lösungsmittel und Feststoff, betragen, damit die Fäden und Fasern ein Wasserrückhaltevermögen von mindestens 10% aufweisen. Der prozentuale Gehalt an Nichtlöser in der Spinnlösung beeinflußt die Profilgebung an der Düse nicht. Entscheidend ist vielmehr, daß eine Mindestviskosität der Spinnlösung vorliegt. Bei Feststoffgehalten bis 40 Gew.-% haben sich Nichtlöseranteile von 5 bis 10 Gew.-% als optimal erwiesen, um Acrylhohlfasern mit einem Wasserrückhaltevermögen von größer als 10% zu erhalten. Die den in Längsrichtung im Inneren der Faser angeordneten durchgehenden kontinuierlich fortlaufenden Kanal umgebende Feststoffmasse weist eine Kern/Mantel-Struktur auf. Die Stärke des Fasermantels läßt sich durch das Verhältnis Polymerfeststoff zu Nichtlöseranteil in weiten Grenzen variieren. Entsprechend den Ausführungen bei der Verwendung von Wasser als Nichtlöser gilt auch bei der Verwendung von Nichtlösern, deren Siedepunkt oberhalb des Siedepunktes des Spinnlösungsmittels liegt, daß Acrylnitrilcopolymerisate mit K-Werten kleiner als 81 in höherer Konzentration und Acrylnitrilcopolymerisate mit K-Werten größer als 81 in geringerer Konzentration in der Spinnlösung die geforderte Mindestviskosität ergeben.

Die Ermittlung der Mindestviskosität kann bei zwei unterschiedlichen Temperaturen, nämlich bei 80°C und 100°C, vorgenommen werden. Diese Maßnahme trägt der Tatsache Rechnung, daß einerseits die Bestimmung der Viskosität bei Spinnlösungen die als Nichtlöser Wasser enthalten, wegen der Verdampfung des Wassers bei 100°C schwierig ist, während hingegen in die Bestimmung der Viskosität bei anderen Spinnlösungen, die als Nichtlöser eine Substanz enthalten, deren Siedepunkt über der des Spinnlösungsmittels liegt, bei 80°C wegen auftretender Gelierneigung problematisch werden kann. Die Bestimmung der Viskosität wasserhaltiger Spinnlösungen kann jedoch auch bei 100°C vorgenommen werden, wenn in geschlossenem System gearbeitet wird.

Solange die zu verspinnende Spinnlösung einen endlichen Kugelfallsekundenwert ergibt, ist die Herstellung von Acrylnitrilhohlfasern aus dieser Spinnlösung im Prinzip möglich. Aus wirtschaftlichen Gründen jedoch lassen sich bei herkömmlichen Spinnanlagen Spinnlösungen mit Viskositäten über 300 Kugelfallsekunden, gemessen bei 80 oder 100°C, nicht mehr unproblematisch verarbeiten, so daß sich hieraus eine natürliche Obergrenze des Viskositätsbereiches ergibt.

Vorzugsweise beträgt die Viskosität daher bei 80°C 120 bis 300 und bei 100°C 75 bis 300 Kugelfallsekunden.

Als Spinnlösungsmittel kommen neben Dimethylformamid auch die noch höher siedenden Lösungsmittel wie Dimethylacetamid, Dimethylsulfoxid, Ethylencarbonat und N-Methylpyrrolidon und ähnliche in Frage.

Geeignete Acrylnitrilpolymere zur Herstellung von Hohlfasern und -fäden sind Acrylnitrilhomo- und -copolymerisate, wobei die Copolymerisate wenigstens 50 Gew.-%, vorzugsweise wenigstens 80 Gew.-% einpolymerisierter Acrylnitrileinheiten enthalten.

Neben der Düsenlochfläche spielen, wie angegeben, Schenkelbreite und Abstand der Ringsegmente voneinander eine wichtige Rolle. Unter Schenkelbreite einer Profildüse wird hier der Abstand zwischen der äußeren Begrenzung der vorgegebenen Profilform in mm, nicht jedoch der Abstand zur Düsenlochmitte hin, verstanden.

Die erfindungsgemäßen Fasern zeichnen sich neben den bereits erwähnten Eigenschaften für Dialyse und Ultrafiltrationszwecke besonders noch durch ihr hohes Wasserrückhaltevermögen aus. Textile Flächengebilde aus derartigen Fasern besitzen, wie bereits in der DE-A-2 719 019 erwähnt, einen guten Tragekomfort. Das Wasserrückhaltevermögen beträgt in allen Fällen, wo eine geschlossene, in sich einheitliche Hohlfaser mit konstantem Hohlraumanteil vorliegt, mindestens 10%. Bei nicht einheitlichen Hohlfaserquerschnittsformen sowie teils offenen, teils geschlossenen Formen werden je nach Hohlraumanteil schwankende Werte für das Wasserrückhaltevermögen ermittelt. Das Wasserrückhaltevermögen wird in Anlehnung an die DIN-Vorschrift 53 814 (vgl. Melliand Textilberichte 4, 1973, Seite 350) bestimmt.

Die Faserproben werden 2 Stunden in Wasser getaucht, das 0,1% Netzmittel enthält. Danach werden die Fasern 10 Minuten mit einer Beschleunigung von 10 000 m/sec² zentrifugiert und die Wassermenge gravimetrisch ermittelt, die in und zwischen den Fasern zurückgehalten wird. Zur Bestimmung des Trockengewichts werden die Fasern bis zur Feuchtekonstanz bei 105°C getrocknet. Das Wasserrückhaltevermögen (WR) in Gew.-% ist:

$$WR = \frac{m_f - m_{tr}}{m_{tr}} \times 100$$

$m_f$ = Gewicht des feuchten Fasergutes
$m_{tr}$ = Gewicht des trockenen Fasergutes

Derartige Hohlraumfasern neigen infolge ihrer Struktur bei Belastung mit hohen Temperaturen zu Querschnittsdeformationen. Wird beispielsweise ein endloses Hohlraumkabel bei Temperaturen oberhalb 160°C getrocknet, so platzen einzelne Hohlraumkapillaren unter Entstehung von unregelmäßigen, teils offenen Faserquerschnitten und hohen Kurzfaseranteilen auf. Bei der Nachbehandlung der erfindunggemäßen Fasern hat sich folgende Nachbehandlungsfahrweise als optimal erwiesen:

Waschen-Strecken-Präparieren-Vortrocknen-Kräuseln-Schneiden-Trocknen bis maximal 140°C. Bevorzugte Trocknungstemperatur beim Vortrocknen ist 80 bis 100°C, beim Trocknen 110 bis 130°C. Werden die erfindungsgemäßen Acrylhohlfasern, wie eben erwähnt, nachbehandelt, so erhält man in sich geschlossene, gleichförmige Hohlraumfasern mit untereinander gleichen Hohlraumanteilen.

Die Fig. 1 bis 7 zeigen Düsenlöcher und deren Anordnung auf der Düsenplatte, die dem erfindungsgemäßen Verfahren entsprechen und solche die entsprechend eingesetzt nicht den gewünschten Erfolg geben.

Fig. 1 zeigt ein Düsenloch, wie es erfindungsgemäß verwendet wird.

Fig. 2 und 3 zeigen die Anordnung der Düsenlöcher nach Fig. 1 auf der Düsenplatte.

Fig. 4 zeigt ein für die Erfindung nicht geeignetes Düsenloch mit zwei Ringsegmenten.

Fig. 5 und 6 zeigen die Anordnung der Düsenlöcher nach Fig. 4 auf der Düsenplatte.

Fig. 7 zeigt ein für die Erfindung nicht geeignetes Düsenloch mit vier Ringsegmenten.

## Beispiel 1

59 kg Dimethylformamid (DMF) werden mit 3 kg Wasser in einem Kessel bei Raumtemperatur unter Rühren vermischt. Anschließend werden 38 kg eines Acrylnitrilcopolymerisates aus 93,6% Acrylnitril, 5,7% Acrylsäuremethylester und 0,7% Natriummethallylsulfonat vom K-Wert 81 unter Rühren bei Raumtemperatur zudosiert. Die Suspension wird über eine Zahnradpumpe in einen mit einem Rührwerk versehenen Spinnkessel gepumpt. Dann wird die Suspension, die einen Feststoffgehalt von 38 Gew.-% und einen Wassergehalt von 3 Gew.-%, bezogen auf Gesamtlösung, aufweist, in einem doppelwandigen Rohr mit Dampf von 4,0 bar erhitzt. Die Verweilzeit im Rohr beträgt 7 Minuten. Die Temperatur der Lösung am Rohrausgang ist 138°C. Im Rohr befinden sich mehrere Mischkämme zur Homogenisierung der Spinnlösung. Die Spinnlösung, welche eine Viskosität von 176 Kugelfallsekunden bei 90°C aufweist, wird nach Verlassen der Aufheizvorrichtung ohne Zwischenkühlung filtriert und direkt dem Spinnschacht zugeführt.

## Beispiel 2

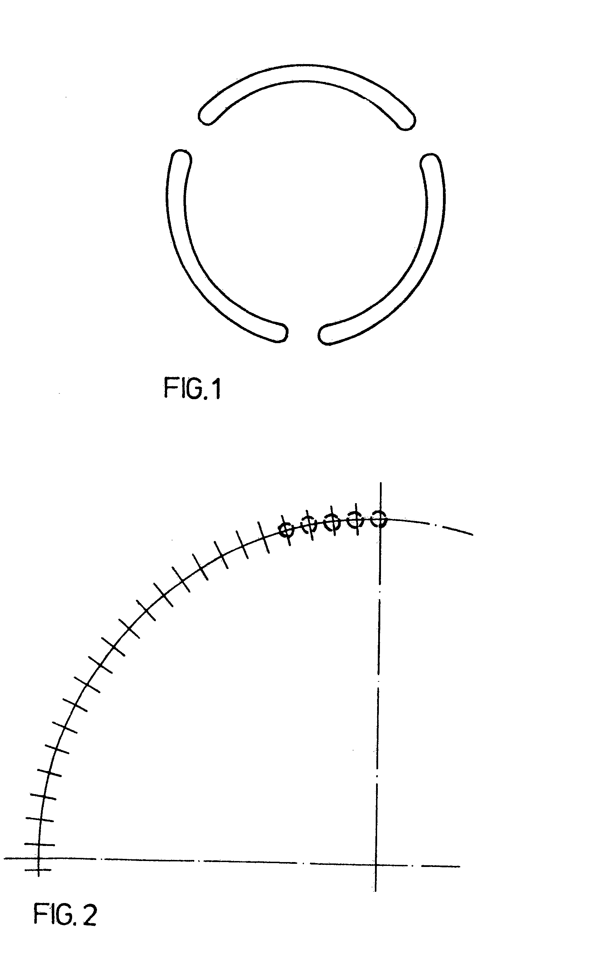

a) Ein Teil der Spinnlösung aus Beispiel 1 wird aus einer 90 Lochdüse mit ringförmigen Düsenlöchern deren Ring aus drei gleichgroßen Ringsegmenten besteht (vgl. Fig. 1) trocken versponnen. Die Düsenlöcher sind auf der Düsenplatte entsprechend Fig. 2 angeordnet. Die Düsenlochfläche beträgt 0,16 mm², die Schenkelbreite 0,05 mm und der Abstand zwischen je zwei Ringsegmenten 0,15 mm. Die Schachttemperatur liegt bei 160°C und die Lufttemperatur bei 120°C. Die durchgesetzte Luftmenge, die in unmittelbarer Nähe der Spinndüse auf das aus dieser austretenden Fadenbündel in Querrichtung zum Faden einseitig von der Spinnschachtmitte aus nach allen Seiten ausströmt, beträgt 30 m³/n. Die Abzugsgeschwindigkeit der Fäden liegt bei 200 Meter/Minute. Das Spinngut vom Titer 950 dtex wird auf Spulen gesammelt, zu einem Band vom Gesamttiter 142 500 dtex gefacht, anschließend in Wasser von 80°C gewaschen, in kochendem Wasser 1 : 4 verstreckt, mit antistatischer Präparation versehen, gekräuselt, zu Stapelfasern von 60 mm Länge geschnitten und anschließend auf einem Siebbandtrockner bei 120°C getrocknet. Die Hohlfasern, die einen Endtiter von 3,3 dtex besitzen, haben eine Reißfestigkeit von 2,6 cN/tex und eine Reißdehnung von 33%. Das Wasserrückhaltevermögen beträgt 34,3%. Zur mikroskopischen Beurteilung der Querschnittsgeometrie wurden die Faserkapillaren in Methacrylsäuremethylester eingebettet und quer geschnitten. Die im differentiellen Interferenzkontrastverfahren hergestellten lichtmikroskopischen Aufnahmen zeigen, daß die Probenquerschnitte der Fasern eine vollkommen gleichmäßige runde Hohlraumstruktur besitzen. Der Hohlraumanteil liegt bei ca. 50% der gesamten Querschnittsfläche.

b) Ein weiterer Teil der Spinnlösung wird wie in Beispiel 2a) beschrieben aus einer 90 Lochdüse trocken versponnen, wobei unter sonst gleichen Spinnbedingungen die durchgesetzte Spinnluft von 40 m³/h hälftig aufgeteilt und zum einen von innen quer zur Richtung des Fadenabzuges und zum anderen von außen in Richtung des Fadenabzuges auf das Fadenbündel einwirkt. Das Spinngut wird wie in Beispiel 2a) weiter behandelt. Die Probenquerschnitte der Fasern zeigen wiederum eine vollkommen einheitliche, geschlossene Hohlraumstruktur.

### Beispiel 3

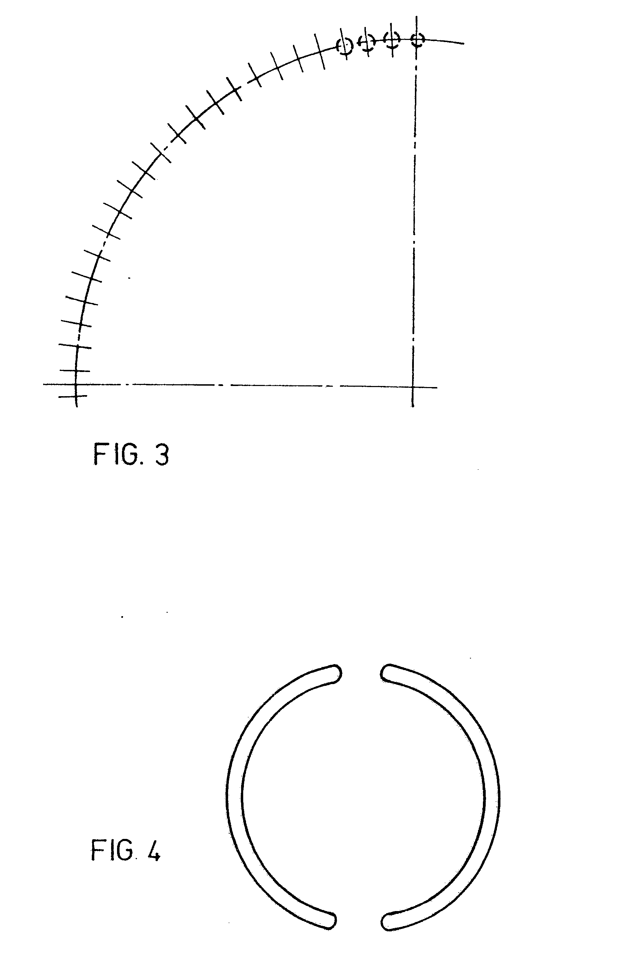

a) Eine Spinnlösung nach Beispiel 1 wird wie dort beschrieben aus einer 90 Lochdüse mit ringförmigen Düsenlöchern, deren Ring aus drei gleich langen Ringsegmenten besteht, trocken versponnen, wobei unter sonst gleichen Spinnbedingungen die Anordnung der Düsenlöcher der Fig. 3 entspricht. Das Spinngut wird wie in Beispiel 2a) gesammelt, gefacht und zu Fasern vom Endtiter 3,3 dtex nachbehandelt. Die Probenquerschnitte der Fasern zeigen wiederum eine vollkommen einheitliche geschlossene Hohlraumstruktur.

b) Ein weiterer Teil der Spinnlösung wird wie in Beispiel 3a) trocken versponnen, wobei unter sonst gleichen Spinnbedingungen lediglich die durchgesetzte Spinnluft sowohl von außen in Richtung des Fadenabzuges, als auch von innen quer zur Richtung des Fadenabzuges auf das austretende Fadenbündel einwirkt. Die Probenquerschnitte der Fasern zeigen erneut vollkommen einheitliche, geschlossene Hohlraumstrukturen.

### Beispiel 4 (Vergleichsbeispiel)

Eine Spinnlösung nach Beispiel 1 wird wie dort beschrieben aus einer 90 Lochdüse mit ringförmigen Düsenlöchern, deren Ring aus drei gleichgroßen Ringsegmenten besteht, trocken versponnen, wobei die Anordnung der Düsenlöcher Figur 2 entspricht. Die Düsenlochfläche beträgt 0,14 mm², die Schenkelbreite 0,05 mm und der Abstand zwischen zwei Ringsegmenten 0,25 mm. Alle übrigen Spinnbedingungen entsprechen Beispiel 2a). Die Probenquerschnitte der erhaltenen Fasern sind nicht völlig einheitlich und zeigen wechselnde Hohlraumanteile. Die einzelnen Hohlfasern zeigen im Querschnitt verstärkt drei Schwachstellen in gleichmäßigem Abstand zueinander.

### Beispiel 5 (Vergleichsbeispiel)

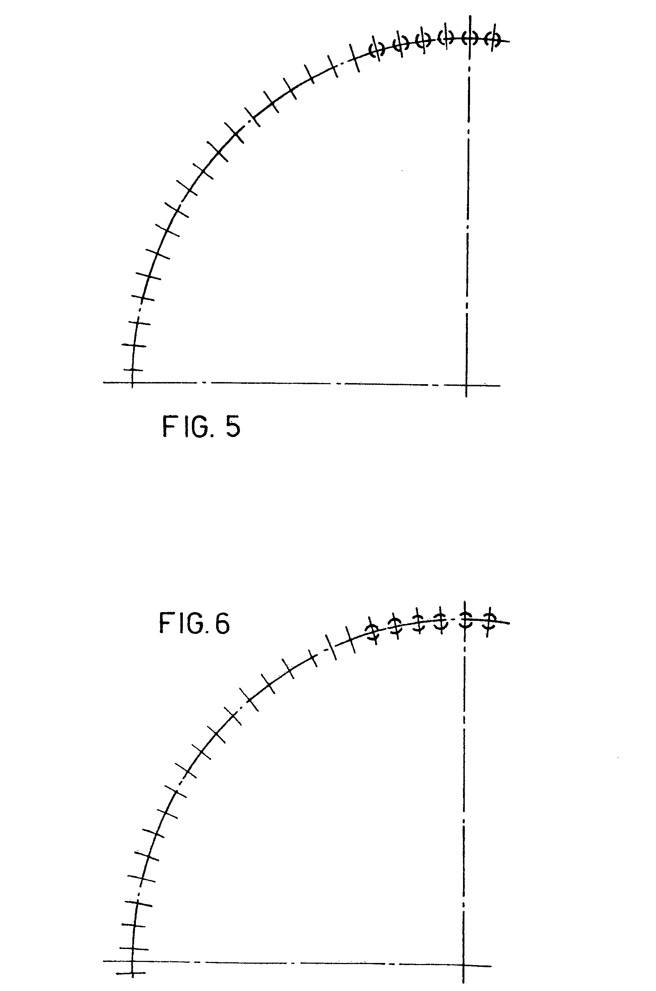

a) Eine Spinnlösung nach Beispiel 1 wird wie dort beschrieben aus einer 90 Lochdüse mit ringförmigen Düsenlöchern, deren Ring aus zwei gleichgroßen Ringsegmenten (vgl. Fig. 4) besteht, wobei die Anordnung der Düsenlöcher Fig. 5 entspricht, trocken versponnen. Die Düsenlochfläche beträgt 0,17 mm², die Schenkelbreite 0,05 mm und der Abstand zwischen zwei Ringsegmenten 0,2 mm. Das Spinngut wird wie in Beispiel 2a) beschrieben gesammelt, gefacht und zu Fasern vom Endtiter 3,3 dtex nachbehandelt. Die Probenquerschnitte der Fasern zeigen keine einheitliche Form und wechselnde Hohlraumanteile. Teilweise liegen einzelne sichelförmige Querschnitte mit halber Titerstärke vor.

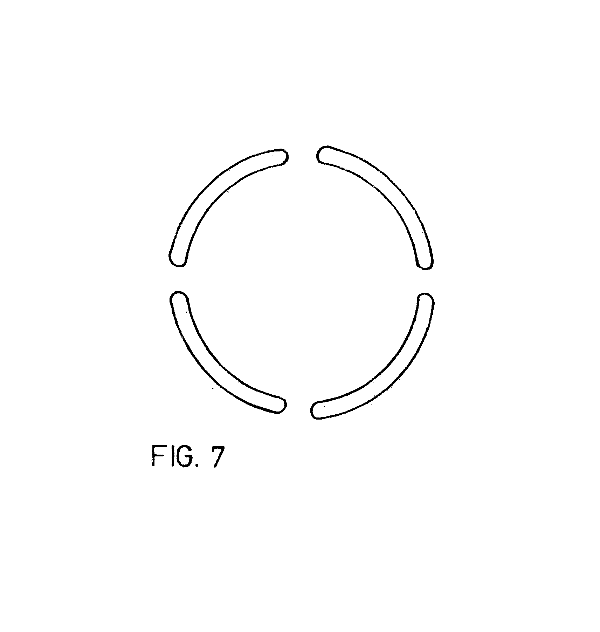

b) Ein weiterer Teil der Spinnlösung wird wie in Beispiel 5a) beschrieben aus einer 90 Lochdüse mit ringförmigen Düsenlöchern, deren Ring aus zwei gleichgroßen Ringsegmenten besteht, trocken versponnen, wobei unter sonst gleichen Spinnbedingungen lediglich die Öffnungen der Profildüse quer zum Schachtmittelpunkt liegen (vgl. Fig. 6). Die Probenquerschnitte der Fasern zeigen wieder keine einheitliche Hohlraumstruktur. Etwa 30% der Fasern liegen als sichelförmige Querschnitte mit halber Titerstärke vor.

c) Die Versuche von Beispiel 5a und 5b werden wiederholt, wobei unter sonst gleichen Bedingungen lediglich die Einwirkung der Spinnluft geändert wird und zwar so, daß ein Teil der Spinnluft von innen quer zur Fadenrichtung und ein Teil der Spinnluft von außen mit der Fadenrichtung geführt wird. Eine Verbesserung der Querschnittstruktur der so erhaltenen Fasern wird nicht erreicht.

### Beispiel 6 (Vergleichsbeispiel)

Eine Spinnlösung nach Beispiel 1 wird wie dort beschrieben aus einer 90 Lochdüse mit ringförmigen Düsenlöchern, deren Ring aus vier gleichgroßen Ringsegmenten besteht, trocken versponnen (vgl. Fig. 7). Die Düsenlochfläche beträgt 0,14 mm², die Schenkelbreite 0,04 mm und der Abstand zwischen zwei Ringsegmenten 0,1 mm. Das Spinngut wird wie in Beispiel 2a) beschrieben gesammelt, gefacht und zu Fasern vom Endtiter 3,3 dtex nachbehandelt. Die Probenquerschnitte der Fasern zeigen keine einheitliche Form und wechselnde Hohlraumanteile. Eine Änderung der Luftzufuhr derart, daß ein Teil der Luft von innen quer und ein Teil der Luft von außen längs der Fadenrichtung zur Einwirkung gebracht wird, bringt keine nennenswerte Verbesserung.

### Patentansprüche

1. Verfahren zur Herstellung von Acrylnitrilhohlfasern und -fäden, wobei man fadenbildende Acrylnitrilpolymere nach einem Trockenspinnprozeß aus einer Lösung durch eine Düse verspinnt, dadurch gekennzeichnet, daß man eine Düse mit ringförmigen Düsenlöchern verwendet, wobei der Ring der ringförmigen Düsenlöcher aus drei, insbesondere gleichgroßen Ringsegmenten besteht, deren Abstand voneinander maximal 0,2 mm beträgt, die Düsenlochfläche der Profildüse kleiner als 0,2 mm² und die Schenkelbreite der Ringsegmente maximal 0,1 mm ist, daß die Lösung eine Viskosität von mindestens 120 Kugelfallsekunden, gemessen bei 80°C oder von mindestens 75 Kugelfallsekunden, gemessen bei 100°C, aufweist und daß die Spinnluft vom Düsenmittelpunkt in Querrichtung zum Fadenabzug auf die Fäden einwirkt.

2. Verfahren nach Anspruch 1, dadurch gekennzeichnet, daß die Spinnluft zusätzlich von außen auf die Fäden einwirkt.

3. Verfahren nach Anspruch 1, dadurch gekennzeichnet, daß die Düsenlochoberfläche kleiner als 0,1 mm² ist und die Schenkelbreite 0,02—0,06 mm beträgt.

4. Verfahren nach Anspruch 1, dadurch gekennzeichnet, daß die Spinnlösungen einen Nichtlöser für das Polymer, der mit dem Spinnlösungsmittel in weiten Grenzen mischbar ist, enthalten.

5. Verfahren nach Anspruch 4, dadurch gekennzeichnet, daß als Nichtlöser Wasser, Glyzerin, Monoethylenglykol, Tetraethylenglykol oder Zucker eingesetzt werden.

6. Verfahren nach Anspruch 1, dadurch gekennzeichnet, daß die Viskosität der Spinnlösung, gemessen bei 80°C 120—300 Kugelfallsekunden und gemessen bei 100°C 75—300 Kugelfallsekunden beträgt.

## Claims

1. Process for the production of hollow acrylonitrile fibres and filaments, in which filament-forming acrylonitrile polymers are spun from a solution through a nozzle by a dry-spinning process, characterised in that a nozzle with annular nozzle holes is used, the ring of the annular nozzle holes consisting of three, in particular, equally large ring segments, the distance from one ring segment to the other being at most 0.2 mm, the area of each nozzle hole of the profiled nozzle being smaller than 0.2 mm² and the leg width of the ring segments being at most 0.1 mm, in that the solution has a viscosity of at least 120 falling-ball seconds, measured at 80°C, or of at least 75 falling-ball seconds, measured at 100°C, and in that the spinning air acts on the filaments from the centre of the nozzle in a transverse direction to that of the filament take-off.

2. Process according to Claim 1, characterised in that the spinning air additionally acts externally on the filaments.

3. Process according to Claim 1, characterised in that the surface area of each nozzle hole is smaller than 0.1 mm² and the leg width is 0.02—0.06 mm.

4. Process according to Claim 1, characterised in that the spinning solutions contain a non-solvent for the polymer, which non-solvent is miscible within wide limits with the spinning solvent.

5. Process according to Claim 4, characterised in that water, glycerol, monoethylene glycol, tetraethylene glycol or sugar are used as the non-solvent.

6. Process according to Claim 1, characterised in that the viscosity of the spinning solution is 120—300 falling-ball seconds measured at 80°C and 75—300 falling-ball seconds measured at 100°C.

## Revendications

1. Procédé de fabrication de fibres creuses et de fils en acrylonitrile, comportant le filage, à travers une buse, de polymères d'acrylonitrile formant des fils, d'après un procédé de filage à sec à partir d'une solution, caractérisé en ce qu'on utilise une buse ayant des trous de forme annulaire, l'anneau des trous de buse de forme annulaire étant constitué par trois segments annulaires en particulier de la même grandeur, dont la distance les uns par rapport aux autres est au maximum de 0,2 mm, l'aire des trous de la buse profilée étant inférieure à 0,2 mm² et la largeur de branche des segments annulaires étant au maximum de 0,1 mm, en ce que la solution présente une viscosité d'au moins 120 chutes de billes seconde, mesurée à 80°C, ou d'au moins 75 chutes de billes seconde, mesurée à 100°C, et en ce que l'air de filage agit sur les fils depuis le centre de la buse en direction transversale vers l'extraction du fil.

2. Procédé selon la revendication 1, caractérisé en ce que l'air de filage agit additionnellement de l'extérieur sur les fils.

3. Procédé selon la revendication 1, caractérisé en ce que la surface des trous de la buse est inférieure à 0,1 mm² et la largeur des branches est de 0,02 à 0,06 mm.

4. Procédé selon la revendication 1, caractérisé en ce que les solutions de filage contiennent un non-solvant pour le polymère, qui peut être mélangé dans de larges limites avec le solvant de tissage.

5. Procédé selon la revendication 4, caractérisé en ce qu'on ajoute comme non-solvant de l'eau, de la glycérine, du monoéthylèneglycol, du tétraéthylèneglycol ou du sucre.

6. Procédé selon la revendication 1, caractérisé en ce que la viscosité de la solution de filage, mesurée à 80°C, est de 120—300 chutes de billes seconde et, mesurée à 100°C, de 75—300 chutes de billes seconde.

FIG.1

FIG. 2

FIG. 3

FIG. 4

FIG. 5

FIG. 6

FIG. 7